# EUROPEAN PATENT APPLICATION

(11) **EP 0 742 446 A1**
(43) Date of publication of application: **13.11.1996**
(21) Application number: 96200012.1
(22) Date of filing: 04.01.1996
(51) Int. Cl.: G01S 3/786

(54) **A method and apparatus for determining the relative positioning of bodies**

(30) Priority: 09.05.1995 IT MI950924
(71) Applicant: FINMECCANICA S.p.A. AZIENDA ANSALDO, I-16128 Genova (IT)
(72) Inventor: Parenti, Riccardo, I-16132 Genova (IT)
(74) Representative: Perani, Aurelio

(57) **Abstract**

The method described enables the relative displacement of two bodies (1, 2) to be determined upon the basis of the rotation undergone as a result of the displacement by a straight line (R) which joins them. More specifically, the method of the invention provides for the determination of the angle of rotation (α) by measuring the change in the orientation (θ) of a reflecting surface (6) situated on one of the bodies, which is brought about in order to reflect the light radiation emitted by a source (5) placed on the other body onto a fixed element (7).

The invention also includes an apparatus for implementing the method, in which the fixed element (7) is constituted by a photodiode with at least two sensitive elements connected for feedback to a control unit; the latter brings about the change in the orientation of the surface (6) after the emission of an electrical signal generated by the different distribution of the light radiation on the sensitive elements.

## Description

In general, the subject of the present invention is a method of determining the relative positioning of two bodies.

In fact, as is known, it is often necessary, in the industrial field, to evaluate the relative positioning of bodies as a result of the displacement of one or both of them in the course of a production process; for example, the case of carriages for transporting pieces in various stores or within automated production areas may be considered, as well as parts of robots or other machines in general.

Usually, after the relative positioning of the bodies has been determined, by techniques which will be described briefly below, it is communicated to an operator or to a control unit of the production system who or which, upon confirmation of the correct positioning of the bodies, work pieces, machine parts, etc., actually brings about the start of an operation or of another subsequent operative stage of the process taking place.

It is appropriate to state at this point that the evaluation of the relative positioning of the bodies to which reference is made for the invention is based upon the determination of an angle defined by the rotation of a straight line which joins two fixed points of the bodies; in fact, when one of these moves relative to the other, the straight line joining them undergoes a rotation thus defining an angle which can be taken as a parameter for the determination of the displacement to be measured.

More specifically, therefore, the present invention relates to a method of determining the angle defined by the rotation of a straight line joining two bodies as a result of relative displacement of the bodies.

Currently, the evaluation of relative positioning is carried out in various industrial applications by triangulation operations between the bodies and reference elements provided appropriately in the areas of operation; for this purpose, video cameras mounted on the bodies are used for making video recordings. A recognized limitation of this evaluation technique lies in the fact that it does not enable the relevant angle to be determined on the basis of a direct reading of a parameter of the system but requires a fairly laborious calculation which is not suitable for application in the field of high-performance automated production processes.

Moreover, the video cameras mentioned above, as well as the electronic equipment necessary for processing the images recorded, are quite expensive and delicate as regards their operation and the known equipment in which they are used thus has limitations as regards costs and reliability in operation, particularly in unfavourable environmental conditions.

The object of the invention is to devise a method of determining the angle defined by the rotation of a straight line joining two bodies as a result of the relative displacement of the bodies, which has characteristics such as to overcome the problems mentioned in relation to the prior art.

This object is achieved by a method defined in the first of the claims which follow this description; the invention also includes equipment for carrying out the method just mentioned, the characteristics of which are given in the dependent claims.

For a better understanding of the further characteristics and the advantages achieved by the invention, an embodiment thereof is described below by way of nonlimiting example with the aid of the appended drawings, in which:
Figure 1 is a schematic view of the apparatus according to the invention,
Figures 2 and 3 show a detail of the apparatus of Figure 1, in respective operative conditions,
Figure 4 shows a photodiode included in the apparatus of the preceding drawings.

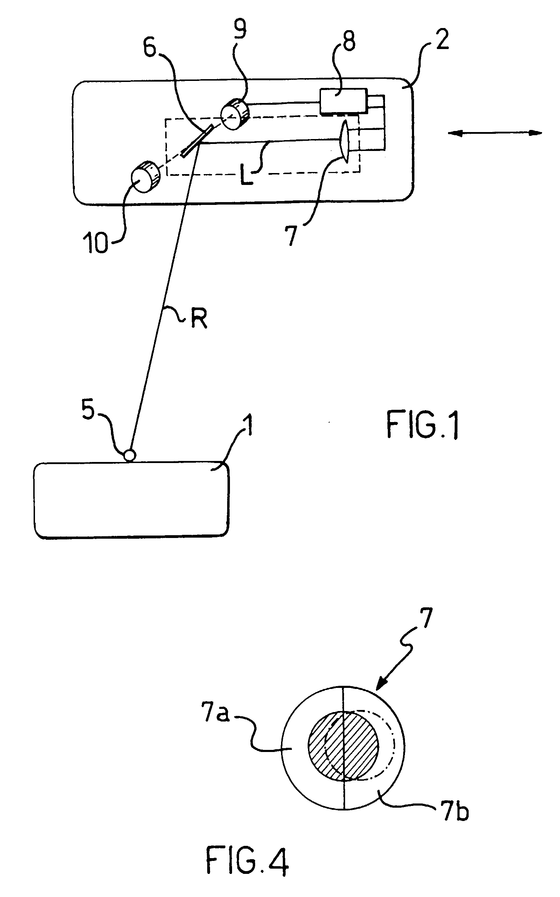

More specifically, for simplicity, the following description will relate to the case of two bodies 1 and 2 the relative positioning of which is to be measured with an apparatus according to the invention, the first body being fixed, whereas the second is movable, along a horizontal straight line indicated by the arrow in Figure 1, like a carriage along straight guides; moveover, the embodiment considered herein relates to a case in which the angle to be measured is determined by a displacement of the body 2 in a plane. Naturally, the description relating to this particular embodiment of the invention should be considered to have more general validity and is also applicable in cases in which the body 1 is also movable and/or in which one or both of the bodies undergo rotations together with simple translations, as well as to the case in which the relative displacement of the bodies does not take place solely in a single plane; in fact, this situation would only complicate the description of the embodiment of the invention, but clearly the principles explained below in relation to a simplified embodiment thereof can also be applied in the more complex cases mentioned above, taking account of the common laws of physics and mechanics.

The various parts of the apparatus according to the invention are mounted on the bodies 1 and 2 as follows.

More precisely, a light source 5 disposed on the body 1 can emit light radiation onto an orientable reflecting surface 6 situated on the movable body 2. The source is constituted by a normal lamp and the apparatus has optical means such as lenses, mirrors or the like, not shown in the drawings, for focusing the light rays in the form of a beam; these means may be disposed either adjacent the source or adjacent the reflecting surface.

The apparatus of the invention also provides for a photodiode 7 mounted in a fixed manner on the body 2 and of the type comprising two sensitive elements 7a and 7b arranged like a dial (see Figure 4); the electrical signal output by the photodiode 7 is determined by the difference between the voltages at the terminals of the sensitive elements 7a and 7b and is sent to a control unit 8 of the equipment which processes it, as will be made clearer below with reference to the operation of the apparatus.

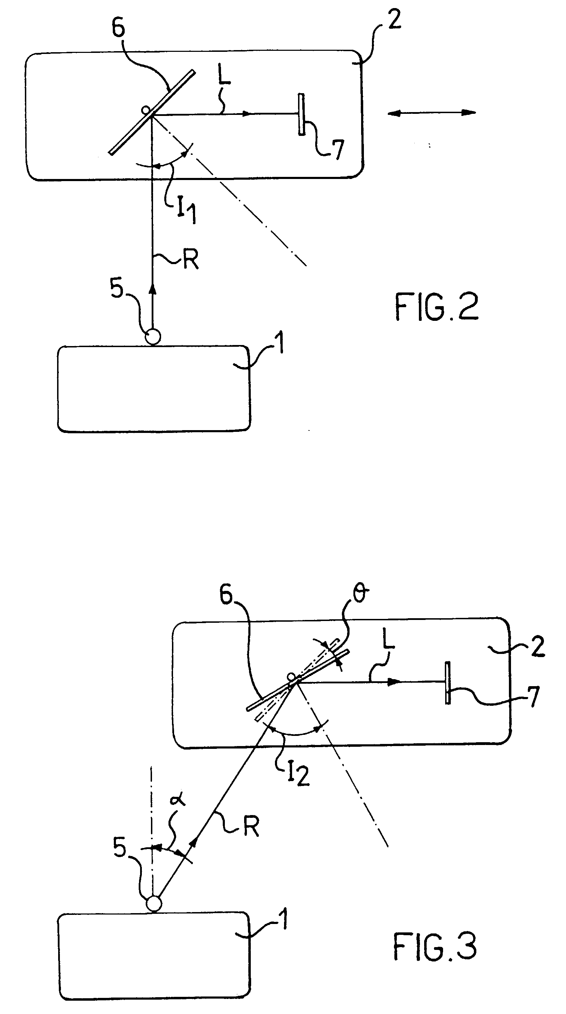

The unit 8 operates drive means 9 to adjust the angle of orientation θ of the reflecting surface 6; more specifically, in this embodiment, the reflecting surface 6 rotates about an axis perpendicular to the plane of the drawing of Figures 2, 3 and passing through the centre of the reflecting surface so that a fixed reference line L joining the centre of the surface 6 with that of the photodiode 7 is defined. Moreover, in this embodiment, for convenience of representation, the straight line R which joins the two bodies and the rotation of which serves to determine the angle α of the relative displacement of the bodies has been selected to correspond to a light ray emitted by the source 5 and striking the centre of the reflecting surface 6 (see Figures 2 and 3).

The value of the angle of rotation θ of the reflecting surface 6 is detected by a transducer 10, for example, in the form of a normal pulse generator (an encoder) or another equivalent device which provides a direct indication of the aforementioned rotation. Finally, according to a preferred embodiment, the surface 6 and the photodiode 7 are situated inside a housing structure (shown in broken outline in Figure 1) having an aperture similar to that for the lens of a camera or video camera for admitting the light rays coming from the source 5.

The operation of the device described above provides for the light radiation emitted by the source 5 to be reflected in the form of a beam by the surface 6 and to be distributed equally on the sensitive elements 7a and 7b of the photodiode 7; more specifically, the light radiation reflected onto the photodiode 7 gives rise to a projection, visible in Figure 4, which is essentially a spot of light distributed symmetrically on the two sensitive elements. In this situation, the voltages at the terminals of the two sensitive elements are equal and the photodiode therefore transmits no electrical signal to the control unit 8. When a relative displacement of the bodies 1 and 2 occurs, the angle of incidence I1 of the light rays on the surface 6, defined as the angle between the straight line R and the perpendicular to the reflecting surface passing through the centre thereof, undergoes a change so that the light radiation reflected by the surface 6 onto the photodiode 7 is no longer distributed equally on the sensitive elements 7a and 7b (see the broken line in Figure 4). This non-uniform distribution produces a difference between the voltages at the terminals of the two sensitive elements which therefore gives rise to an electrical signal which is related thereto and which is transmitted by the photodiode 7 to an input of the control unit 8; the latter processes the signal received, comparing it with a reference value stored therein and activates the drive means 9 with feedback control in order to rotate the surface 6 so as to re-establish the uniform distribution of the light radiation reflected onto the sensitive elements 7a and 7b.

In practice, therefore, during the movement of the body 2 relative to the body 1, the apparatus according to the invention represents a system for keeping the light radiation constantly reflected onto the photodiode 7 by means of controlled rotations of the reflecting surface 6; from a reading of the value of the angle of rotation θ of the reflecting surface indicated by the transducer 10, it is thus possible to determine the relative displacement of the bodies 1 and 2 on the basis of relationships between known angular quantities. In this connection, it can be seen that the angle α determined by the rotation of the straight line R joining the two bodies 1 and 2 as a result of their relative displacement depends upon the angle θ as well as the angles of incidence I1 and I2 of the light radiation on the reflecting surface 6; the latter (I2) is the angle formed by the joining line R at the centre of the reflecting surface in the final position of the bodies. Both of these angles of incidence I1 and I2 can be determined as functions of the fixed reference line L.

Considerable advantages are achieved by the apparatus according to the invention.

Firstly, the structural simplicity of the apparatus, by virtue of which it is particularly reliable in operation, can be seen; in fact, video cameras are no longer necessary for making video recordings and, moreover, all of the various parts which make up the equipment are available commercially at limited cost, thus rendering the invention competitive from an economic point of view.

Moreover, it should be pointed out that the operating principle of the apparatus enables it also to have very good performance from the point of view of speed; in fact, the use of a photodiode as the element for detecting the change in the angle of reflection of the light radiation and hence, indirectly, in the movements of the bodies permits the production, in real time, of an electrical signal which can indicate the state of the system moment by moment and can therefore be used as feedback for the regulation and control of the movement of the bodies, as well as for the control of the reflecting surface. This would not be the case, on the other hand, if a video camera were used instead of the photodiode since its operation is more complex and it would therefore not be able to ensure the same performance as regards speed in the provision of an electrical response signal, except with the use of certain sophisticated, fragile and expensive instruments and accessories.

Furthermore, it should be made clear that the reflecting surface 6 does not have significant inertia since it can in fact be constituted by a simple mirror of small dimensions; its rotations consequently take place with considerable speed and precision further favouring the performance of the equipment; by virtue of this latter advantageous aspect, the measurements made with the apparatus can therefore provide a very precise evaluation of the positioning of the bodies.

Finally, another advantage which is achieved by the invention and should be taken into consideration lies in the fact that, in some conditions, the operation of the apparatus is not adversely affected by the change of the distance between the bodies the positioning of which is to be evaluated. In fact, it must be remembered that the electrical signal emitted by the photodiode 7 depends in turn on the electrical signals derived from its sensitive elements 7a and 7b; identical light radiation is projected onto these and is that coming from the reflecting surface.

If the light radiation reflected uniformly by the surface 6 onto the photodiode 7 changes in intensity, for example, as a result of the movement of the bodies 1 and 2 apart or towards one another, or owing to the presence of mist or dust which could in some way obstruct the transmission of the light rays, the responses of the sensitive elements 7a and 7b of the photodiode undergo the same change which depends upon the different intensity of the radiation striking them and which does not therefore alter the difference between them. It will be observed, in any case, in this context, that the housing of the reflecting surface and of the photodiode inside a housing structure limits any interference with external light; moreover, this protection from interference could also be increased by screening optical filters or by the emission of light radiation with certain wavelengths, according to the different environments in which the equipment is used.

In this connection, a further advantageous result achieved by the invention should be added: in fact, it must be pointed out that the equipment described above is also suitable for operating with high-frequency modulation of the light radiation. In other words, a light source for emitting pulsed light radiation with a frequency of the order of a few Mhertz could be used in the equipment described above; this is possible by virtue of the photodiode, its functional characteristics, and its method of use which enable it to evaluate radiation with similar physical parameters.

This fact therefore enables the apparatus also to function in the presence of other light sources without danger of interference with the radiation emitted thereby; in fact, if the apparatus is arranged to operate on the basis of the physical parameters first mentioned, it is insensitive to other undesirable light radiation present externally which could cause malfunctioning thereof.

For this purpose, it should be pointed out by way of indication that one or more solid-state emitters (LED) could be used as light sources suitable for this result.

Naturally, variants of the invention with respect to the foregoing description should not be excluded.

For example, it should be pointed out that the number of sensitive elements of the photodiode could be greater than two; in fact, as stated above, the embodiment of the invention described relates to the case of a displacement of bodies which takes place in a plane; if a displacement having components lying in different planes is to be measured, the photodiode used could advantageously have a number of sensitive elements greater than two, its functional purposes remaining unchanged. In this situation, it is therefore hardly necessary to observe that the reflecting surface must also be adapted, for example, by being supported by a ball joint, in order to be able to change its orientation not only by rotating about a single axis as seen above; similarly, the parameters for determining the orientation of the reflecting surface will also have to be adapted, that is, in practice, it will be necessary to have an indication of the measurement of the angles relating to all of the direction cosines of the perpendicular to the surface and not only the angle θ of the previous embodiment.

Moreover, the favouring of focused reflection of the rays by the surface 6 by the provision of a concavity of the surface should not be excluded; in this latter case, the considerations expressed with reference to a flat surface will have to be adapted to the different geometry of the system but will nevertheless continue to be applicable.

Finally, it should be pointed out that the replacement of the photodiode used in the previous embodiment by another functionally equivalent photo-receiver device should not be excluded; amongst the possible alternatives, a selenium photo-receiver is suggested.

## Claims

1. A method of determining an angle (α) defined by the rotation of a straight line (R) joining two bodies (1, 2) as a result of relative displacement of the bodies, characterized in that it comprises the following steps:
- providing a light source (5) on one of the two bodies for emitting light radiation onto an orientable reflecting surface (6) provided on the other body;
- providing an element (7) which is fixed to the body having the reflecting surface and onto which the light radiation reflected by the surface is to be projected;
- orienting the reflecting surface as the relative positioning of the bodies changes so as to keep the light radiation reflected thereby projected onto the fixed element;
- determining the aforesaid angle (a) from the change in the orientation of the reflecting surface undergone as a result of the change in the relative positioning of the bodies.

2. Apparatus for implementing the method according to Claim 1, characterized in that it comprises:
- a light source (5) disposed on one of the two bodies for emitting light radiation onto an orientable reflecting surface (6) disposed on the other body (6),
- means (8, 9) for varying the orientation of the reflecting surface,
- means (10) for indicating the orientation of the reflecting surface,
- a plurality of photoelectric transducer elements (7a, 7b) which are configured substantially as a dial, are fixed to the body having the reflecting surface, can receive radiation reflected by the surface and are connected to the means for varying the orientation of the surface,
the latter means acting on the reflecting surface, as a result of the emission of an electrical signal produced by the difference in the voltages at the terminals of the transducer elements, in order to vary its orientation and to distribute equally between the transducer elements the radiation projected thereon by the reflecting surface, as the relative positioning of the bodies changes, the angle being determined in dependence on the indication of the orientation of the reflecting surface by the indicating means.

3. Apparatus according to Claim 2, characterized in that the reflecting surface (6) and the photoelectric transducer elements (7a, 7b) are housed in the same, substantially closed housing structure having an aperture for admitting the light radiation coming from the source (5).

4. Apparatus according to Claim 2 or Claim 3, characterized in that the means (10) for measuring the orientation of the reflecting surface (6) comprise an electric pulse generator.

5. Apparatus according to any one of Claims 2 to 4, characterized in that the reflecting surface (6) can be oriented by rotation about an axis passing through its geometrical centre which centre is struck by the light radiation coming from the source (5).

6. Apparatus according to any one of Claims 2 to 5, characterized in that it comprises optical means for focusing the light radiation emitted by the source (5) and/or that reflected by the surface (6).

7. Apparatus according to any one of Claims 2 to 6, characterized in that the means (8, 9) for varying the orientation of the reflecting surface (6) comprise a control unit (8) an input of which receives an electrical signal coming from the photoelectric transducer elements (7a,7b), and drive means (9) which are subservient to the control unit and which act on the reflecting surface in order to vary its orientation on the basis of a command transmitted by the control unit.

8. Apparatus according to one of Claims 2 to 7, characterized in that the light radiation emitted by the source (5) is modulated radiation.

9. Apparatus according to one of Claims 2 to 8, characterized in that the photoelectric transducer elements (7a, 7b) include a photodiode.

10. Apparatus according to one of Claims 2 to 9, characterized in that the light source comprises at least one solid-state emitter.
